# EUROPEAN PATENT APPLICATION

(11) **EP 4 787 410 A1**
(43) Date of publication of application: **05.08.2026**
(21) Application number: 24885199.0
(22) Date of filing: 01.02.2024
(51) Int. Cl.: H01G 4/30

(54) **MULTILAYER CERAMIC ELECTRONIC COMPONENT AND METHOD FOR MANUFACTURING MULTILAYER CERAMIC ELECTRONIC COMPONENT**

(30) Priority: 02.11.2023 JP 2023188117
(71) Applicant: Murata Manufacturing Co., Ltd., Nagaokakyo-shi, Kyoto 617-8555 (JP)
(72) Inventor: UCHIDA, Hiroyuki, Nagaokakyo-shi, Kyoto 617-8555 (JP); MIYAZAKI, Tomochika, Nagaokakyo-shi, Kyoto 617-8555 (JP)
(74) Representative: Stöckeler, Ferdinand
(86) International application number: PCT/JP2024/003281
(87) International publication number: WO 2025/094421

(57) **Abstract**

A multilayer ceramic electronic component capable of suppressing a decrease in reliability is provided. A multilayer ceramic capacitor (10) includes a multilayer body (12) in which a plurality of ceramic layers (14) and a plurality of internal electrode layers (16) are alternately laminated, and an outer electrode (30) formed on an outer surface of the multilayer body (12) and electrically connected to the internal electrode layers (16). The outer electrode (30) includes a resin electrode layer (33) that includes a resin (50) and a plurality of electrically conductive filler particles (40), and at least some of the plurality of electrically conductive filler particles (40) each include a Cu particle 41 as a core and have at least part of a surface composed of a Cu-Ag alloy including Cu and Ag.

## Description

### Technical Field

The invention relates to a multilayer ceramic electronic component and a manufacturing method for a multilayer ceramic electronic component.

### Background Art

There is a significant demand expected for multilayer ceramic capacitors (MLCCs) as electronic components mounted on automobiles and electronic components for mobile phones.

Patent Document 1 discloses a multilayer ceramic electronic component that includes a multilayer body and a pair of outer electrodes that are opposed to each other with the multilayer body interposed therebetween. Each of the outer electrodes of Patent Document 1 includes a metal electrode layer and a resin electrode layer. The resin electrode layer is composed of electrically conductive particles and a resin. The electrically conductive particles mainly include needle-shaped particles, and the needle-shaped particles are particles made of Ag (Ag filler). As a result, it is possible to easily and reliably obtain a multilayer ceramic electronic component that can sufficiently suppress occurrence of an oscillation phenomenon and can achieve a sufficient smoothing effect.

### Citation List

### Patent Document

Patent Document 1: Japanese Unexamined Patent Application Publication (Translation of PCT Application) No. 2003-075295

### Summary of Invention

### Technical Problem

However, the needle-shaped particles in the electrically conductive particles of Patent Document 1 are particles made of Ag (Ag filler). For example, when used in load environments such as high-temperature and high-humidity environments, electrochemical migration of Ag may occur to reduce the insulation resistance value between a pair of outer electrodes and, in some cases, may cause a short circuit. As a result, this may lead to a decrease in the reliability of multilayer ceramic electronic components.

For this reason, it is a main object of the invention to provide a multilayer ceramic electronic component capable of suppressing a decrease in reliability and a manufacturing method for the multilayer ceramic electronic component. Solution to Problem

A multilayer ceramic electronic component according to the invention includes: a multilayer body in which a plurality of ceramic layers and a plurality of internal electrode layers are alternately laminated; and an outer electrode formed on an outer surface of the multilayer body and electrically connected to the internal electrode layers.

The outer electrode includes a resin electrode layer that includes a resin and a plurality of electrically conductive filler particles.

At least some of the plurality of electrically conductive filler particles each include a Cu particle as a core and have at least part of a surface composed of a Cu-Ag alloy including Cu and Ag.

With the multilayer ceramic electronic component according to the invention, when at least some of the plurality of electrically conductive filler particles have at least part of a surface composed of a Cu-Ag alloy, the amount of Ag (Ag particles mainly composed of Ag element) present on the surface of each of the electrically conductive filler particles can be reduced. In other words, the amount of Ag, which tends to cause electrochemical migration on the surface of each of the electrically conductive filler particles, can be reduced. As a result, for example, short circuits between outer electrodes having different potentials due to electrochemical migration can be reduced. Therefore, a decrease in the reliability of the multilayer ceramic capacitor can be suppressed.

A manufacturing method for a multilayer ceramic electronic component according to this invention includes: a multilayer body formation step of forming a multilayer body in which a plurality of ceramic layers and a plurality of internal electrode layers are alternately laminated; an application step of applying a resin electrode conductive paste onto the multilayer body, the resin electrode conductive paste including a plurality of electrically conductive filler precursor particles and a resin precursor, the plurality of electrically conductive filler precursor particles each including a Cu particle as a core, the Cu particle having a surface coated with Ag having a thickness greater than or equal to 3 nm and less than or equal to 100 nm; and a curing step of forming a resin electrode layer, the resin electrode layer including a plurality of electrically conductive filler particles and a resin by subjecting the resin electrode conductive paste to a curing treatment in an atmosphere higher than or equal to 180°C and lower than or equal to 230°C, the plurality of electrically conductive filler particles being obtained by curing the plurality of electrically conductive filler precursor particles, the resin being obtained by curing the resin precursor.

Through the curing step, at least some of the plurality of electrically conductive filler particles each include a Cu particle as a core and have at least part of a surface composed of a Cu-Ag alloy including Cu and Ag.

With the manufacturing method for a multilayer ceramic electronic component according to the invention, a multilayer ceramic electronic component capable of suppressing the above-described decrease in reliability can be manufactured.

### Advantageous Effects of Invention

According to the invention, it is possible to provide a multilayer ceramic electronic component capable of suppressing a decrease in reliability.

The above-described object, the other objects, features, and benefits of the invention will be further apparent from the following description of modes for carrying out the invention with reference to the accompanying drawings.

### Brief Description of Drawings

[Fig. 1] Fig. 1 is an external perspective view that shows an example of a multilayer ceramic capacitor as a multilayer ceramic electronic component according to an embodiment of the invention.
[Fig. 2] Fig. 2 is a cross-sectional view taken along the line II-II in Fig. 1.
[Fig. 3] Fig. 3 is a cross-sectional view taken along the line III-III in Fig. 1.
[Fig. 4] Fig. 4 is an enlarged schematic diagram of portion A in Fig. 2.
[Fig. 5] Fig. 5 is a top view that shows the shortest distance between outer electrodes.
[Fig. 6] Fig. 6 is a schematic diagram of a test apparatus for an electrochemical migration evaluation test.
[Fig. 7] Fig. 7(a) is an SEM image of flat electrically conductive filler particles, and Fig. 7(b) is an analysis graph that shows the results of a line scan performed in a short-side direction on the flat electrically conductive filler particles shown in Fig. 7(a).
[Fig. 8] Fig. 8(a) is an SEM image of flat electrically conductive filler particles, and Fig. 8(b) is an analysis graph that shows the results of a line scan performed in a long-side direction on the flat electrically conductive filler particles shown in Fig. 8(a).
[Fig. 9] Fig. 9(a) is an SEM image of substantially spherical, flat electrically conductive filler particles, and Fig. 9(b) is an analysis graph that shows the results of a line scan performed on the substantially spherical, flat electrically conductive filler particles shown in Fig. 9(a).
[Fig. 10] Fig. 10 is an analysis graph that shows the results of dendrite initiation time.

### Description of Embodiments

### <Embodiment>

### 1. Multilayer Ceramic Capacitor

A multilayer ceramic capacitor as an example of a multilayer ceramic electronic component according to an embodiment of the invention will be described. In the present embodiment, the multilayer ceramic capacitor is a two-terminal-type multilayer ceramic capacitor.

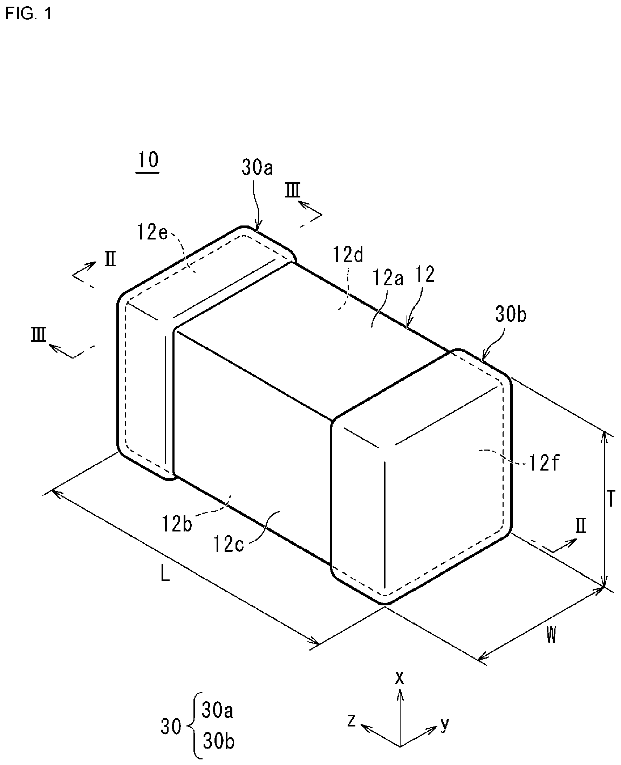

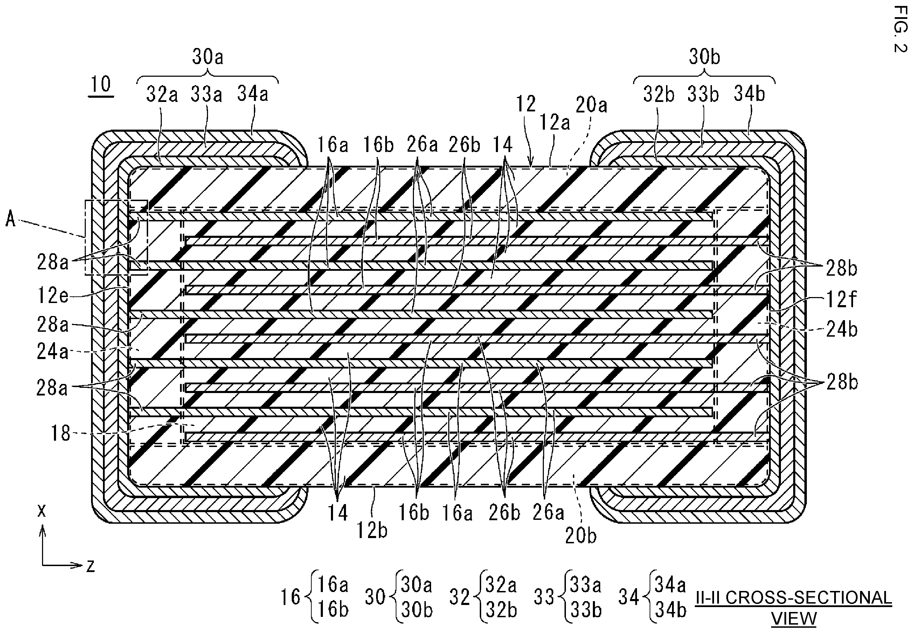

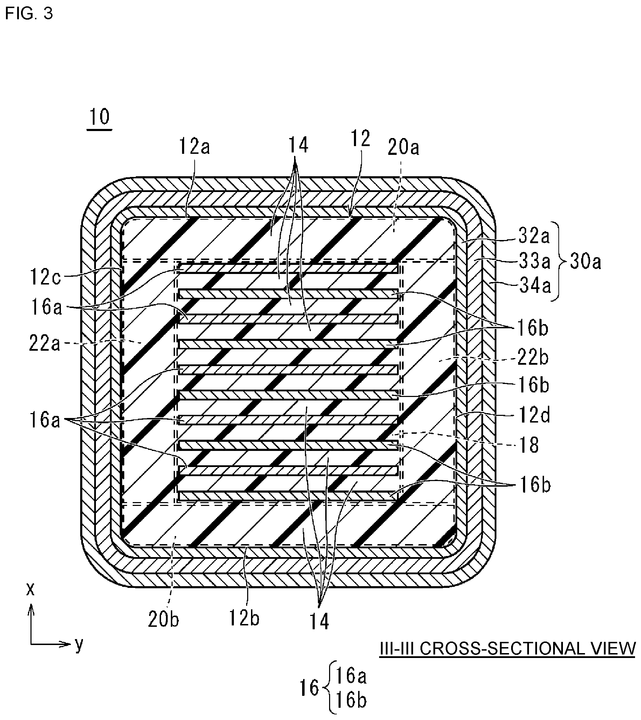

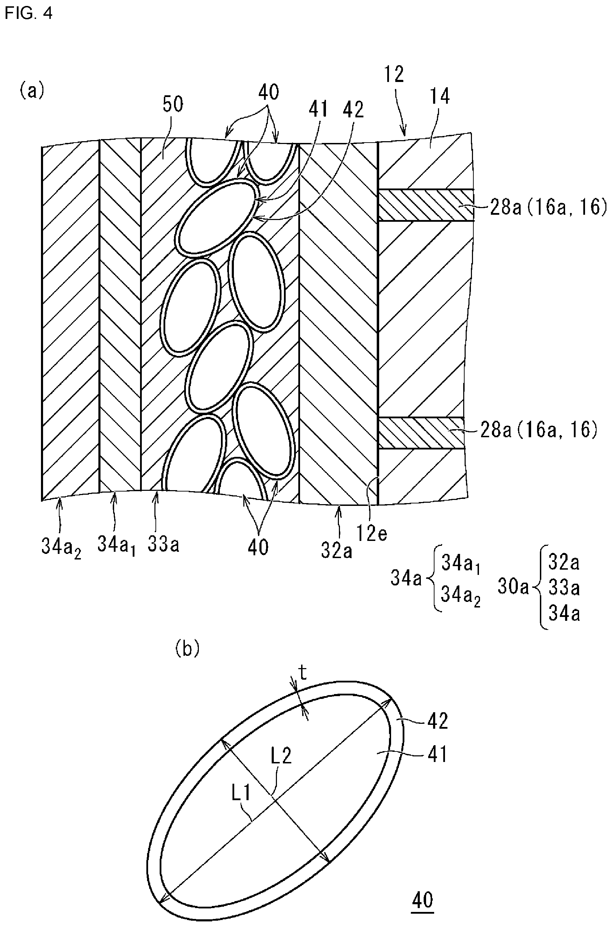

Fig. 1 is an external perspective view that shows an example of the multilayer ceramic capacitor as the multilayer ceramic electronic component according to the embodiment of the invention. Fig. 2 is a cross-sectional view taken along the line II-II in Fig. 1. Fig. 3 is a cross-sectional view taken along the line III-III in Fig. 1. Fig. 4 is an enlarged schematic diagram of portion A in Fig. 2.

As shown in Figs. 1 to 4, the multilayer ceramic capacitor 10 includes a rectangular parallelepiped multilayer body 12 and outer electrodes 30 disposed at both end portions of the multilayer body 12.

### (1) Multilayer Body

The multilayer body 12 includes a plurality of laminated ceramic layers 14 and a plurality of internal electrode layers 16 laminated on selected ones of the ceramic layers 14. Furthermore, the multilayer body 12 has a first main surface 12a and a second main surface 12b opposed to each other in a height direction (lamination direction) x, a first side surface 12c and a second side surface 12d opposed to each other in a width direction y orthogonal to the height direction x, and a first end surface 12e and a second end surface 12f opposed to each other in a length direction z orthogonal to the height direction x and the width direction y. In the multilayer body 12, corner portions and ridge portions are rounded. The corner portion refers to a portion where three adjacent sides of the multilayer body intersect, and the ridge portion refers to a portion where two adjacent sides of the multilayer body intersect. One or some or all of the pair of first main surface 12a and second main surface 12b, the pair of first side surface 12c and second side surface 12d, and the pair of first end surface 12e and second end surface 12f may have unevenness or the like.

The multilayer body 12 includes an inner layer portion 18 composed of one or more ceramic layers 14 and a plurality of internal electrode layers 16 disposed on top of them. The internal electrode layers 16 include first internal electrode layers 16a extended to the first end surface 12e and second internal electrode layers 16b extended to the second end surface 12f. In the inner layer portion 18, the ceramic layers 14 and the first and second internal electrode layers 16a and 16b are alternately laminated in the height direction x.

The inner layer portion 18 is sandwiched between two outer layer portions. In the multilayer body 12, a portion where the first internal electrode layers 16a (described later) and the second internal electrode layers 16b (described later) are opposed to each other is referred to as an opposed portion (effective layer portion). A portion between the opposed portion and the first side surface 12c and a portion between the opposed portion and the second side surface 12d are also referred to as W gaps or side gaps. A portion between the opposed portion and the first end surface 12e and including lead-out electrode portions of either the first internal electrode layers 16a or the second internal electrode layers 16b and a portion between the opposed portion and the second end surface 12f and including the lead-out electrode portions of either the first internal electrode layers 16a or the second internal electrode layers 16b are also referred to as L gaps or end gaps.

The multilayer body 12 includes an outer layer portion that surrounds the inner layer portion 18. The outer layer portion includes a first main surface-side outer layer portion 20a positioned on the first main surface 12a side, a second main surface-side outer layer portion 20b positioned on the second main surface 12b side, a first side surface-side outer layer portion 22a positioned on the first side surface 12c side, a second side surface-side outer layer portion 22b positioned on the second side surface 12d side, a first end surface-side outer layer portion 24a positioned on the first end surface 12e side, and a second end surface-side outer layer portion 24b positioned on the second end surface 12f side.

The first main surface-side outer layer portion 20a is formed of a plurality of the ceramic layers 14 positioned on the first main surface 12a side between the first main surface 12a and both the outermost surface of the inner layer portion 18 on the first main surface 12a side and a straight line extended (extension) from the outermost surface.

Similarly, the second main surface-side outer layer portion 20b is formed of a plurality of the ceramic layers 14 positioned on the second main surface 12b side between the second main surface 12b and both the outermost surface of the inner layer portion 18 on the second main surface 12b side and a straight line extended from the outermost surface.

The first side surface-side outer layer portion 22a is formed of a plurality of the ceramic layers 14 positioned on the first side surface 12c side between the first side surface 12c and the outermost surface of the inner layer portion 18 on the first side surface 12c side.

Similarly, the second side surface-side outer layer portion 22b is formed of a plurality of the ceramic layers 14 positioned on the second side surface 12d side between the second side surface 12d and the outermost surface of the inner layer portion 18 on the second side surface 12d side.

The first end surface-side outer layer portion 24a is formed of a plurality of the ceramic layers 14 positioned on the first end surface 12e side between the first end surface 12e and the outermost surface of the inner layer portion 18 on the first end surface 12e side.

Similarly, the second end surface-side outer layer portion 24b is formed of a plurality of the ceramic layers 14 positioned on the second end surface 12f side between the second end surface 12f and the outermost surface of the inner layer portion 18 on the second end surface 12f side.

In each of these outer layer portions, the ceramic layer 14 does not need to be a collection of a plurality of sheets and may have a single layer structure.

The dimensions of the multilayer body 12 are not limited., Preferably, the dimension in the length direction z is greater than or equal to 0.39 mm and less than or equal to 3.30 mm, the dimension in the height direction x is greater than or equal to 0.21 mm and less than or equal to 2.70 mm, and the dimension in the width direction y is greater than or equal to 0.21 mm and less than or equal to 2.70 mm.

The ceramic layer 14 can be formed of, for example, a dielectric material as a ceramic material. Examples of such dielectric materials include dielectric ceramics including a component, such as BaTiO₃, CaTiO₃, SrTiO₃, and CaZrO₃. When the above dielectric material is used as a main component, the dielectric material in which a secondary component having a lower content than the main component, such as an Mn compound, an Fe compound, a Cr compound, a Co compound, and an Ni compound, is added according to the desired characteristics of the multilayer body 12 may be used.

When a piezoelectric ceramic material is used for the ceramic layer 14, the multilayer ceramic electronic component functions as a piezoelectric component. Specific examples of the piezoelectric ceramic material include PZT (lead zirconate titanate)-based ceramic materials.

When a semiconductor ceramic material is used for the ceramic layer 14, the multilayer ceramic electronic component functions as a thermistor. Specific examples of the semiconductor ceramic material include spinel-based ceramic materials.

When a magnetic ceramic material is used for the ceramic layer 14, the multilayer ceramic electronic component functions as an inductor. When the multilayer ceramic electronic component functions as an inductor, the internal electrode layers 16 serve as coil-shaped conductors. Specific examples of the magnetic ceramic material include a ferrite ceramic material.

The thickness of the ceramic layer 14 after firing is preferably greater than or equal to 0.2 µm and less than or equal to 2 µm. More preferably, the thickness is preferably greater than or equal to 0.2 µm and less than or equal to 0.55 µm. As a result, the number of layers can be increased, which contributes to higher capacitance. The number of ceramic layers 14 laminated is, for example, greater than or equal to 15 and less than or equal to 1000.

The multilayer body 12 includes the plurality of first internal electrode layers 16a and the plurality of second internal electrode layers 16b each having, for example, a substantially rectangular shape, as the plurality of internal electrode layers 16. The plurality of first internal electrode layers 16a and the plurality of second internal electrode layers 16b are embedded so as to be alternately disposed at equal intervals with the ceramic layers 14 interposed therebetween in the height direction x of the multilayer body 12.

As shown in Figs. 2 and 3, the first internal electrode layers 16a are disposed on selected ones of the plurality of ceramic layers 14 and are located within the multilayer body 12. Each of the first internal electrode layers 16a has a first counter electrode portion 26a opposed to the second internal electrode layer 16b, and a first lead-out electrode portion 28a positioned at one end side of the first internal electrode layer 16a and extending from the first counter electrode portion 26a to the first end surface 12e of the multilayer body 12. The first lead-out electrode portion 28a has its end portion extended to the surface of the first end surface 12e and exposed from the multilayer body 12.

The shape of the first counter electrode portion 26a of the first internal electrode layer 16a is not limited and is preferably a rectangular shape in plan view. However, the corner portions in plan view may be rounded or the corner portions may be chamfered in plan view (tapered). The corner portions may have a tapered shape in plan view so as to incline toward each side.

The shape of the first lead-out electrode portion 28a of the first internal electrode layer 16a is not limited and is preferably a rectangular shape in plan view. However, the corner portions in plan view may be rounded or the corner portions may be chamfered in plan view (tapered). The corner portions may have a tapered shape in plan view so as to incline toward each side.

The width of the first counter electrode portion 26a of the first internal electrode layer 16a and the width of the first lead-out electrode portion 28a of the first internal electrode layer 16a may be formed with the same width, or one of the widths may be formed narrower.

As shown in Figs. 2 and 3, the second internal electrode layers 16b are disposed on selected ones of the plurality of ceramic layers 14 and are located within the multilayer body 12. Each of the second internal electrode layers 16b has a second counter electrode portion 26b opposed to the first internal electrode layer 16a, and a second lead-out electrode portion 28b positioned at one end side of the second internal electrode layer 16b and extending from the second counter electrode portion 26b to the second end surface 12f of the multilayer body 12. The second lead-out electrode portion 28b has its end portion extended to the surface of the second end surface 12f and exposed from the multilayer body 12.

The shape of the second counter electrode portion 26b of the second internal electrode layer 16b is not limited and is preferably a rectangular shape in plan view. However, the corner portions in plan view may be rounded or the corner portions may be chamfered in plan view (tapered). The corner portions may have a tapered shape in plan view so as to incline toward each side.

The shape of the second lead-out electrode portion 28b of the second internal electrode layer 16b is not limited and is preferably a rectangular shape in plan view. However, the corner portions in plan view may be rounded or the corner portions may be chamfered in plan view (tapered). The corner portions may have a tapered shape in plan view so as to incline toward each side.

The width of the second counter electrode portion 26b of the second internal electrode layer 16b and the width of the second lead-out electrode portion 28b of the second internal electrode layer 16b may be formed with the same width, or one of the widths may be formed narrower.

The first internal electrode layer 16a and the second internal electrode layer 16b can be composed of a suitable conductive material, for example, a metal such as Ni, Cu, Ag, Pd, and Au, or an alloy that includes at least one of these metals, such as Ag-Pd alloy.

The thickness of each of the internal electrode layers 16, that is, the first internal electrode layers 16a and the second internal electrode layers 16b, is preferably greater than or equal to 0.2 µm and less than or equal to 2.0 µm. Furthermore, the thickness is more preferably greater than or equal to 0.2 µm and less than or equal to 0.5 µm.

The number of the first internal electrode layers 16a and the second internal electrode layers 16b is, for example, greater than or equal to 15 in total and less than or equal to 1000 in total.

Sn may be present at the interface between the ceramic layer 14 and the internal electrode layer 16. When Sn is present, the Sn may be present in a layered form parallel to the internal electrode layer 16 or may be present in a dot-like form. Sn may be present in solid solution within the internal electrode layer 16 or may be present within the ceramic layer 14.

In the multilayer body 12, the first counter electrode portion 26a of the first internal electrode layer 16a and the second counter electrode portion 26b of the second internal electrode layer 16b are opposed to each other with the ceramic layer 14 interposed therebetween, so the capacitance is formed. Therefore, it is possible to obtain capacitance between the first outer electrode 30a connected to the first internal electrode layers 16a and the second outer electrode 30b connected to the second internal electrode layers 16b, so the characteristics of the capacitor are exhibited.

### (2) Outer Electrode

The outer electrodes 30 are disposed on the first end surface 12e side and the second end surface 12f side of the multilayer body 12, as shown in Figs. 1 to 4.

The outer electrodes 30 include the first outer electrode 30a and the second outer electrode 30b.

The first outer electrode 30a is connected to the first internal electrode layers 16a and is disposed on at least the surface of the first end surface 12e. In the present embodiment, the first outer electrode 30a is extended from the first end surface 12e of the multilayer body 12 so as to be also disposed on part of the first main surface 12a, part of the second main surface 12b, part of the first side surface 12c, and part of the second side surface 12d. In this case, the first outer electrode 30a is electrically connected to the first lead-out electrode portions 28a of the first internal electrode layers 16a.

The second outer electrode 30b is connected to the second internal electrode layers 16b and is disposed on at least the surface of the second end surface 12f. In the present embodiment, the second outer electrode 30b is extended from the second end surface 12f so as to be also disposed on part of the first main surface 12a, part of the second main surface 12b, part of the first side surface 12c and part of the second side surface 12d. In this case, the second outer electrode 30b is electrically connected to the second lead-out electrode portions 28b of the second internal electrode layers 16b.

Each of the outer electrodes 30 includes a base electrode layer 32 including a metal component, a resin electrode layer 33 disposed on the base electrode layer 32, and a plating layer 34 disposed on the resin electrode layer 33.

The first outer electrode 30a includes a first base electrode layer 32a including a metal component, a first resin electrode layer 33a disposed on the first base electrode layer 32a, and a first plating layer 34a disposed on the first resin electrode layer 33a.

The second outer electrode 30b includes a second base electrode layer 32b including a metal component, a second resin electrode layer 33b disposed on the second base electrode layer 32b, and a second plating layer 34b disposed on the second resin electrode layer 33b.

### (2-1) Base Electrode Layer

The first base electrode layer 32a is connected to the first internal electrode layers 16a and is disposed on the surface of the first end surface 12e. The first base electrode layer 32a is extended from the first end surface 12e so as to be also disposed on part of the first main surface 12a, part of the second main surface 12b, part of the first side surface 12c, and part of the second side surface 12d. In this case, the first base electrode layer 32a is electrically connected to the first lead-out electrode portions 28a of the first internal electrode layers 16a. The first base electrode layer 32a is disposed only on the surface of the first end surface 12e.

The second base electrode layer 32b is connected to the second internal electrode layers 16b and is disposed on the surface of the second end surface 12f. The second base electrode layer 32b is extended from the second end surface 12f so as to be also disposed on part of the first main surface 12a, part of the second main surface 12b, part of the first side surface 12c ,and part of the second side surface 12d. In this case, the second base electrode layer 32b is electrically connected to the second lead-out electrode portions 28b of the second internal electrode layers 16b. The second base electrode layer 32b is disposed only on the surface of the second end surface 12f.

The base electrode layer 32 includes a conductive metal and a glass component. The metal of the base electrode layer 32 includes, for example, at least one selected from among Cu, Ni, Ag, Pb, Ag-Pb alloy, Au, and the like. The glass of the base electrode layer 32 includes at least one selected from among B, Si, Pd, Ba, Mg, Al, Li, and the like. The base electrode layer 32 may be formed of multiple layers. The base electrode layer 32 is formed by applying conductive paste containing glass and metal onto the multilayer body 12 and then baking the conductive paste. The base electrode layer 32 may be co-fired with the ceramic layers 14 and the internal electrode layers 16 or may be baked after firing the ceramic layers 14 and the internal electrode layers 16.

Each of the base electrode layer 32 positioned on the first end surface 12e and the base electrode layer 32 positioned on the second end surface 12f preferably has a shape in which the thickness at the central portion is greater than the thickness at the other portion. In other words, when focusing only on the first end surface 12e and the second end surface 12f, the thickness of the central portion of the base electrode layer 32 at each end surface is preferably greater than the thickness of the portion other than the central portion of the base electrode layer 32 at each end surface. As a result, the contact angle of solder with the plating layer 34 of the outer electrode 30 becomes acute, and, therefore, a component of which the direction of stress applied from the solder to the plating layer 34 is parallel to the plating plane increases during heat shock cycling, so the effect of reducing the probability of occurrence of solder cracks can be obtained. For example, the thickness of the thickest part of the base electrode layer 32 on each of the first and second end surfaces 12e and 12f is preferably greater than or equal to 10 µm and less than or equal to 150 µm. The thickness of the outer electrode 30 of the base electrode layer 32 on each of the first and second main surfaces 12a and 12b and the first and second side surfaces 12c and 12d is preferably greater than or equal to 5 µm and less than or equal to 20 µm.

### (2-2) Resin Electrode Layer

The resin electrode layers 33 include a first resin electrode layer 33a and a second resin electrode layer 33b.

The first resin electrode layer 33a is disposed so as to cover the first base electrode layer 32a. Specifically, the first resin electrode layer 33a is preferably disposed at the first end surface 12e on the surface of the first base electrode layer 32a and provided so as to extend also to the first main surface 12a, the second main surface 12b, the first side surface 12c, and the second side surface 12d on the surface of the first base electrode layer 32a. The first resin electrode layer 33a may be disposed only on the surface of the first base electrode layer 32a, which is disposed on the first end surface 12e, or may be disposed so as to cover the surface of the first base electrode layer 32a disposed on the first end surface 12e and part of the surface of the first base electrode layer 32a disposed on the first main surface 12a, the second main surface 12b, the first side surface 12c, and the second side surface 12d.

Similarly, the second resin electrode layer 33b is disposed so as to cover the second base electrode layer 32b. Specifically, the second resin electrode layer 33b is preferably disposed at the second end surface 12f on the surface of the second base electrode layer 32b and provided so as to extend also to the first main surface 12a, the second main surface 12b, the first side surface 12c, and the second side surface 12d on the surface of the second base electrode layer 32b. The second resin electrode layer 33b may be disposed only on the surface of the second base electrode layer 32b, which is disposed on the second end surface 12f, or may be disposed so as to cover the surface of the second base electrode layer 32b disposed on the second end surface 12f and part of the surface of the second base electrode layer 32b disposed on the first main surface 12a, the second main surface 12b, the first side surface 12c, and the second side surface 12d.

The thickness of the resin electrode layer 33 is preferably, for example, greater than or equal to 10 µm and less than or equal to 200 µm.

The resin electrode layer 33 includes a plurality of electrically conductive filler particles 40 and a resin 50. In the resin electrode layer 33, the plurality of electrically conductive filler particles 40 is dispersed within the resin 50.

At least some of the plurality of electrically conductive filler particles 40 each include a Cu particle 41 as a core and have at least part of a surface composed of a Cu-Ag alloy including Cu and Ag. In other words, at least the Cu particle 41 is present at the central portion of the electrically conductive filler particle 40, and a Cu-Ag alloy is present at least at part of the surface of the electrically conductive filler particle 40.

Fig. 4 schematically shows the electrically conductive filler particles 40. Each of the electrically conductive filler particles 40 shown in Fig. 4 includes the Cu particle 41, which is a core, and a surface layer portion 42 positioned at the surface of the electrically conductive filler particle 40. In the present embodiment, for the sake of convenience of description, as shown in Fig. 4, the surface portion of each electrically conductive filler particle 40 is referred to as the surface layer portion 42, and the surface layer portion 42 is illustrated in a state of being positioned on (covering) the surface of the Cu particle 41. However, in the actual electrically conductive filler particles 40, there may be cases where the Cu particle 41 and the surface layer portion 42 cannot be completely distinguished from each other. In other words, in electrically conductive filler precursor particles (described later) before becoming the electrically conductive filler particles 40, the Cu particles 41 are cores, and the surfaces of the Cu particles 41 are coated with Ag. In the electrically conductive filler precursor particles, the boundary between the Cu particle 41, which is a core, and Ag coating the Cu particle 41 is substantially clear. When the electrically conductive filler precursor particle is subjected to a curing step, the Cu component of the Cu particle 41 serving as a core and the Ag component of the Ag coating the surface of the Cu particle 41 diffuse into each other. As a result, Cu-Ag alloy is present at the surface of the electrically conductive filler particle 40. In this way, as a result of the diffusion of the Cu component of the Cu particle 41 and Ag on the surface of the Cu particle 41, the boundary between the Cu particle 41 and the surface layer portion 42 becomes unclear, so there may be cases where the Cu particle 41 and the surface layer portion 42 cannot be completely distinguished from each other in the electrically conductive filler particle 40. However, even in this case, the Cu particle 41 is a portion that includes Cu as a main component, and the surface layer portion 42 is the surface of the electrically conductive filler particle 40 and is a portion that includes a Cu-Ag alloy. In the present embodiment, for the sake of convenience of description, the electrically conductive filler particle 40 will be described with reference to Fig. 4 in which the surface layer portion 42 is positioned on the surface of the Cu particle 41. Considering that there may be cases where the Cu particle 41 and the surface layer portion 42 cannot be completely distinguished from each other in the electrically conductive filler particle 40, the following description does not state that the surface layer portion 42 coats the surface of the Cu particle 41, but states that the surface layer portion 42 is positioned at the surface of the electrically conductive filler particle 40.

The Cu particles 41 mainly impart an electrically conductive function to the resin electrode layer 33. The surface layer portion 42 includes a Cu-Ag alloy of Cu and Ag. For example, at least part of the surface layer portion 42 is composed of a Cu-Ag alloy. In other words, at least part of the surface of the electrically conductive filler particle 40 is a Cu-Ag alloy. In this case, part of the surface layer portion 42 other than the Cu-Ag alloy may include Ag (Ag particles mainly composed of elemental Ag) present in part of the surface layer portion 42 other than the Cu-Ag alloy. Unlike the above description, the entire surface layer portion 42 may be a Cu-Ag alloy, that is, the entire surface of the electrically conductive filler particle 40 may be a Cu-Ag alloy. The electrically conductive filler particle 40 has electrical conductivity due to the presence of the Cu particle 41 serving as a core, a Cu-Ag alloy in the surface layer portion 42, Ag particles that can be included in the surface layer portion 42, and the like.

Regarding the configuration of the plurality of electrically conductive filler particles 40, there is a case where all of the plurality of electrically conductive filler particles 40 include a Cu-Ag alloy in the surface layer portions 42, or a case where some of the plurality of electrically conductive filler particles 40 include a Cu-Ag alloy in the surface layer portions 42 and the remainder does not include a Cu-Ag alloy in the surface layer portions 42, and these are mixed. Even when the surface layer portion 42 includes a Cu-Ag alloy in at least some of the plurality of electrically conductive filler particles 40, the amount of Ag that is likely to cause occurrence of electrochemical migration can be reduced to suppress a decrease in the reliability of the multilayer ceramic capacitor 10 due to occurrence of electrochemical migration.

The Cu-Ag alloy includes at least one of a Cu-rich portion in which a Cu component is greater than an Ag component and an Ag-rich portion in which an Ag component is greater than a Cu component. In other words, depending on manufacturing conditions and the like, the Cu-Ag alloy of the electrically conductive filler particle 40 can be formed to be Cu-rich, or can be formed to be Ag-rich, or can be formed in a state where both are mixed. Then, when the Cu-Ag alloy is formed in a state where a Cu-rich portion and an Ag-rich portion are mixed, the surface area of the Cu-rich portion at the surface of the electrically conductive filler particle 40 is larger than the surface area of the Ag-rich portion at the surface of the electrically conductive filler particle 40.

The surface layer portion 42 is preferably within 120 nm from the surface of the electrically conductive filler particle 40 in the direction toward the inside of the electrically conductive filler particle 40. Then, a Cu-Ag alloy is preferably present within 120 nm from the surface of the electrically conductive filler particle 40.

The shape of the electrically conductive filler particle 40 is not limited. In the present embodiment, the shape of the electrically conductive filler particle 40 is flat in cross section. Specifically, for example, the shape of the electrically conductive filler particle 40 is an elongated elliptical shape in cross section. As shown in Fig. 4(b), where the long side of the electrically conductive filler particle 40 is L1 and the short side is L2, the aspect ratio (long side L1 / short side L2) is preferably higher than or equal to two and lower than or equal to seven.

The electrically conductive filler particles 40 may include spherical ones in addition to flat ones or may include spherical ones instead of flat ones.

The electrically conductive filler particles 40 are preferably contained in an amount higher than or equal to 80 mass% and lower than or equal to 90 mass% relative to the total mass of the resin electrode layer 33. As described above, in the present embodiment, the shape of the electrically conductive filler particle 40 is flat; however, the shape of the electrically conductive filler particle 40 may also be spherical. In the resin electrode layer 33, flat electrically conductive filler particles 40 and spherical electrically conductive filler particles 40 may be mixedly contained.

In the present embodiment, the resin 50 is a thermosetting resin. Examples of the thermosetting resin include various known thermosetting resins, such as epoxy resin, phenoxy resin, phenolic resin, urethane resin, silicone resin, and polyimide resin. Among them, epoxy resin that excels in heat resistance, moisture resistance, adhesion, and the like is one of the most appropriate resins.

The resin 50 included in the resin electrode layer 33 is preferably included in an amount higher than or equal to 10 mass% and lower than or equal to 20 mass% relative to the total mass of the resin electrode layer 33.

The resin electrode layer 33 preferably includes a curing agent along with the resin 50. When epoxy resin is used as the resin 50, various known compounds, such as phenol-based compounds, amine-based compounds, anhydride-based compounds, imidazole-based compounds, reactive ester-based compounds, and amide-imide-based compounds, can be used as a curing agent for epoxy resin.

The plurality of electrically conductive filler particles 40 may include electrically conductive filler particles different from the electrically conductive filler particles 40 described in the present embodiment in addition to the electrically conductive filler particles 40 including a Cu-Ag alloy in the surface layer portions 42 described in the present embodiment. However, to suppress occurrence of electrochemical migration, the electrically conductive filler particles 40 described in the present embodiment preferably constitute 80% or higher of the plurality of electrically conductive filler particles 40. The electrically conductive filler particles 40 described in the present embodiment more preferably constitute 90% or higher of the plurality of electrically conductive filler particles 40.

Other than the above, the resin electrode layer 33 may include a coupling agent and a curing accelerator.

The coupling agent is added to improve the adhesion strength of the resin electrode layer 33 to the base electrode layer 32 and the multilayer body 12. In particular, in the resin electrode layer 33, the coupling agent exhibits a significant effect in suppressing a decrease in adhesion strength when water immersion is performed in plating treatment or the like. Various known compounds such as silane-based compounds and titanium-based compounds can be used as the coupling agent. When epoxy resin is used as the resin 50, the above-described adhesion strength is improved by using silane-based coupling agents.

The curing accelerator is added to improve the curability of the resin 50. Various known compounds such as amine-based compounds and imidazole-based compounds can be used as the curing accelerator.

### (2-3) Plating Layer

Next, the first plating layer 34a and the second plating layer 34b, which are the plating layers 34 disposed on the base electrode layers 32, will be described with reference to Figs. 1 to 4.

The first plating layer 34a is disposed so as to cover the first base electrode layer 32a on the first end surface 12e side. Furthermore, the first plating layer 34a may be disposed so as to cover the first base electrode layer 32a on the first main surface 12a side, the second main surface 12b side, the first side surface 12c side, and the second side surface 12d side. However, the first plating layer 34a may be disposed only on the first base electrode layer 32a on the first end surface 12e side.

The second plating layer 34b is disposed so as to cover the second base electrode layer 32b on the second end surface 12f side. Furthermore, the second plating layer 34b may be disposed so as to cover the second base electrode layer 32b on the first main surface 12a side, the second main surface 12b side, the first side surface 12c side, and the second side surface 12d side. However, the second plating layer 34b may be disposed only on the second base electrode layer 32b on the second end surface 12f side.

Each of the first plating layer 34a and the second plating layer 34b includes, for example, at least one selected from among Cu, Ni, Sn, Ag, Pd, Ag-Pd alloy, Au, and the like.

The plating layer 34 may be formed in multiple layers. For example, the first plating layer 34a has a two-layer structure composed of a first lower plating layer 34a₁ and a first upper plating layer 34a₂ covering the first lower plating layer 34a₁, and the second plating layer 34b has a two-layer structure composed of a second lower plating layer 34b₁ and a second upper plating layer 34b₂ covering the second lower plating layer 34b₁. Preferably, the first lower plating layer 34a₁ and the second lower plating layer 34b₁ are Ni plating layers, and the first upper plating layer 34a₂ and the second upper plating layer 34b₂ are Sn plating layers.

The first and second lower plating layers 34a₁ and 34b₁ each composed of an Ni plating layer are used to suppress erosion of the base electrode layer 32 by solder that is used when the multilayer ceramic capacitor 10 is mounted. The first and second upper plating layers 34a₂ and 34b₂ each composed of an Sn plating layer are used to improve the wettability of solder that is used when the multilayer ceramic capacitor 10 is mounted.

Each of the first and second lower plating layers 34a₁ and 34b₁ composed of Ni plating layers is preferably greater than or equal to 1 µm and less than or equal to 15 µm. Each of the first and second upper plating layers 34a₂ and 34b₂ composed of Sn plating layers is preferably greater than or equal to 1 µm and less than or equal to 15 µm.

The first and second upper plating layers 34a₂ and 34b₂ may be omitted. Alternatively, the plating layers 34 may include the first upper plating layer 34a₂ and the second upper plating layer 34b₂ as the outermost layers, or other plating electrodes may be formed on the surface of the first upper plating layer 34a₂ and the surface of the second upper plating layer 34b₂.

### (3) Dimensions of Multilayer Ceramic Capacitor

The dimension, in the length direction z, of the multilayer ceramic capacitor 10 including the multilayer body 12, the first outer electrode 30a, and the second outer electrode 30b is defined as L dimension, the dimension, in the height direction x, of the multilayer ceramic capacitor 10 including the multilayer body 12, the first outer electrode 30a, and the second outer electrode 30b is defined as T dimension, and the dimension, in the width direction y, of the multilayer ceramic capacitor 10 including the multilayer body 12, the first outer electrode 30a, and the second outer electrode 30b is defined as W dimension.

The dimensions of the multilayer ceramic capacitor 10 are not limited. For example, the L dimension in the length direction z is greater than or equal to 0.2 mm and less than or equal to 1.8 mm, the W dimension in the width direction y is greater than or equal to 0.1 mm and less than or equal to 1.0 mm, and the T dimension in the height direction x is greater than or equal to 0.1 mm and less than or equal to 1.0 mm. The dimensions of the multilayer ceramic capacitor 10 can be measured using a microscope.

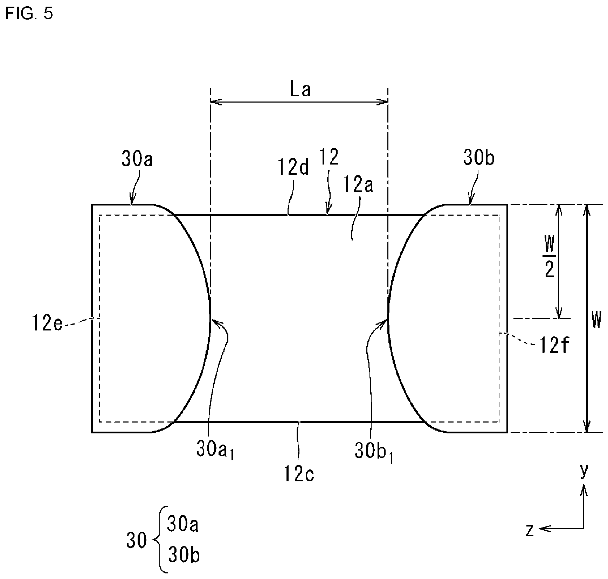

In the multilayer ceramic capacitor 10 with desired dimensions, the shortest distance La in the length direction z between the first and second outer electrodes 30a and 30b is preferably set as follows. Fig. 5 is a top view that shows the shortest distance between the outer electrodes. In an example, Fig. 5 shows the shortest distance La in the length direction z between the first and second outer electrodes 30a and 30b in the top view when viewed from the first main surface 12a side. In the example of Fig. 5, the shapes of the first and second outer electrodes 30a and 30b are exaggerated, and each of the first and second outer electrodes 30a and 30b is formed in an arc shape in the portion opposed to each other in the length direction z. Thus, there is a case where the distance in the length direction z between the first and second outer electrodes 30a and 30b is not constant. Here, the distance between the vertices 30a₁ and 30b₁ of the arc-shaped portions, opposed to each other in the length direction z, of the first and second outer electrodes 30a and 30b is set as the shortest distance La. Each of the vertices 30a₁ and 30b₁ is the vertex of the arc-shaped portion at a point approximately 1/2 of the W dimension in the width direction y (W/2).

The shortest distance La between the first outer electrode 30a and the second outer electrode 30b is preferably greater than or equal to 450 µm and less than or equal to 510 µm. More preferably, the shortest distance La is less than or equal to 480 µm.

When the shortest distance La is relatively small as described above, in a multilayer ceramic capacitor that does not include the resin electrode layers as described above, a short circuit between the first and second outer electrodes 30a and 30b due to occurrence of electrochemical migration is more pronounced. However, in the multilayer ceramic capacitor 10 that includes the resin electrode layers 33 as described above, even when the shortest distance La is short and is less than or equal to 510 µm, occurrence of electrochemical migration is suppressed, so occurrence of a short circuit between the first and second outer electrodes 30a and 30b can be suppressed. Furthermore, even when the shortest distance La is further short and is less than or equal to 480 µm, occurrence of electrochemical migration is suppressed, so occurrence of a short circuit between the first and second outer electrodes 30a and 30b can be suppressed.

In the example of Fig. 5, the shortest distance La is the distance at the point of W/2; however, the shortest distance La is not limited to the shortest distance at this point. For example, the shortest distance La may be the shortest distance at any point where the distance in the length direction z between the first and second outer electrodes 30a and 30b is the shortest.

### 2. Manufacturing Method for Multilayer Ceramic Capacitor

Next, a manufacturing method for a multilayer ceramic capacitor will be described.

(Step 1) First, dielectric sheets for ceramic layers and a conductive paste for internal electrode layers are prepared. The dielectric sheets and the conductive paste for internal electrode layers contain a binder and a solvent. The binder and the solvent may be of known types.

(Step 2) Then, the conductive paste for internal electrode layers is applied onto the dielectric sheets in a predetermined pattern, for example, by screen printing, gravure printing, or the like. As a result, the dielectric sheets with a pattern of the first internal electrode layer and the dielectric sheets with a pattern of the second internal electrode layer are prepared.

As for dielectric sheets, dielectric sheets for outer layers, on which no pattern of the internal electrode layer is applied are also prepared.

A predetermined number of dielectric sheets for outer layers, on which no pattern of the internal electrode layer is applied, are stacked. On top of that, by sequentially stacking the dielectric sheets on which the pattern of the first internal electrode layer is applied and the dielectric sheets on which the pattern of the second internal electrode layer is applied, a portion serving as the inner layer portion 18 is formed. A predetermined number of dielectric sheets for outer layers, on which no pattern of the internal electrode layer is applied, are stacked on the portion serving as the inner layer portion 18. As a result, a multilayer sheet having the inner layer portion 18 and the outer layer portions is formed.

(Step 4) Subsequently, the multilayer sheet is pressed in the lamination direction with a device, such as isostatic press, to produce a multilayer block.

(Step 5) Then, the multilayer block is cut into a predetermined size to obtain multilayer chips. At this time, the corner portions and ridge portions of the multilayer chips may be rounded by barreling or the like.

(Step 6) The multilayer chips are fired to produce the multilayer bodies 12. The firing temperature depends on the materials of the ceramic layers, which are dielectrics, and the internal electrode layers, and is preferably higher than or equal to 900°C and lower than or equal to 1400°C. Steps 1 to 6 constitute a multilayer body formation step.

(Step 7) Subsequently, the first outer electrode 30a is formed on the first end surface 12e of the multilayer body 1, and the second outer electrode 30b is formed on the second end surface 12f of the multilayer body 12. In other words, initially, a paste for base electrode layers is applied onto the first end surface 12e and the second end surface 12f of the multilayer body 12 and baked to form the first base electrode layer 32a of the first outer electrode 30a and the second base electrode layer 32b of the second outer electrode 30b. The baking temperature is preferably higher than or equal to 700°C and lower than or equal to 900°C.

Subsequently, the resin electrode layers 33 are formed. Initially, in an application step, a conductive paste for resin electrodes is applied so as to cover the first and second base electrode layers 32a and 32b. The conductive paste for resin electrodes contains a plurality of electrically conductive filler precursor particles, which are precursors of the electrically conductive filler particles 40, and a resin precursor, which is a precursor of the resin 50. The plurality of electrically conductive filler precursor particles is a material before a curing treatment (described later) is performed on the electrically conductive filler particles 40. The resin precursor is a material before a curing treatment (described later) is performed on the resin 50. A plurality of Cu particles in a state where the surfaces are covered (coated) with Ag are prepared as the plurality of electrically conductive filler precursor particles. The thickness of the Ag coating is, for example, greater than or equal to 3 nm and less than or equal to 10 nm. Substantially the entire surface of each of the Cu particles is preferably coated with Ag. A paste-like resin is prepared as the resin precursor. For example, epoxy resin or the like is prepared as the resin precursor.

The plurality of electrically conductive filler precursor particles may also include electrically conductive filler precursor particles, other than the electrically conductive filler precursor particles for the electrically conductive filler particles 40 having surfaces composed of a Cu-Ag alloy according to the present embodiment.

The conductive paste for resin electrodes may further contain a curing agent, a curing accelerator, a coupling agent, a solvent, and the like.

In the conductive paste for resin electrodes, the plurality of electrically conductive filler precursor particles is preferably included in an amount higher than or equal to 80 mass% and lower than or equal to 90 mass% relative to the total mass of the conductive paste for resin electrodes. In the plurality of electrically conductive filler precursor particles, the mass ratio of Ag to Cu particles preferably ranges from about 3:97 to about 25:75. In the case of this mass ratio, in each of the electrically conductive filler precursor particles that are at least some of the plurality of electrically conductive filler precursor particles, Cu particles in an amount higher than or equal to about 75 mass% and lower than or equal to about 97 mass% serve as cores, and Ag in an amount higher than or equal to about 3 mass% and lower than or equal to about 25 mass% coats substantially the entire surfaces of the Cu particles.

In each of the electrically conductive filler precursor particles that are at least some of the plurality of electrically conductive filler precursor particles, the mass ratio of Ag to Cu particles preferably ranges from about 3:97 to about 10:90. In the case of this mass ratio, in each of electrically conductive filler precursor particles that are at least some of the plurality of electrically conductive filler precursor particles, Cu particles in an amount higher than or equal to about 90 mass% and lower than or equal to about 97 mass% serve as cores, and Ag in an amount higher than or equal to about 3 mass% and lower than or equal to about 10 mass% coats substantially the entire surfaces of the Cu particles.

In the conductive paste for resin electrodes, the resin precursor is preferably included in an amount higher than or equal to 10 mass% and lower than or equal to 20 mass% relative to the total mass of the conductive paste for resin electrodes.

Subsequently, in a drying step, the conductive paste for resin electrodes is dried at a temperature of, for example, 150°C or lower for about 30 minutes. This drying step removes the solvent. After the drying step, in a curing step, the conductive paste for resin electrodes is further subjected to a curing treatment for about an hour in an atmosphere higher than or equal to 180°C and lower than or equal to 230°C. Through the curing treatment, the plurality of electrically conductive filler precursor particles becomes the electrically conductive filler particles 40 in which at least part of the surface of each of the electrically conductive filler particles 40 is in a state of a Cu-Ag alloy of Cu and Ag. In this curing treatment, it is considered that the Cu component of the Cu particles 41 and the Ag component of Ag coating the Cu particles 41 in the electrically conductive filler precursor particles diffuse into each other to form a Cu-Ag alloy in the surface layer portions 42 of the Cu particles 41. As a result, the electrically conductive filler particles 40 in which at least part of the surface of each of the electrically conductive filler particles 40 is a Cu-Ag alloy are formed. The resin precursor is cured through a curing treatment to form the resin 50. There may be cases where all of the plurality of electrically conductive filler precursor particles become the electrically conductive filler particles 40 including the surface layer portions 42 composed of a Cu-Ag alloy and cases where some of the plurality of electrically conductive filler precursor particles become the electrically conductive filler particles 40 including the surface layer portions 42 composed of a Cu-Ag alloy.

Here, in each of the electrically conductive filler precursor particles in the conductive paste for resin electrodes, the surface of the Cu particle 41 is coated with Ag as described above. The thickness of the Ag coating is preferably less than or equal to 100 nm, and more preferably less than or equal to 40 nm. By setting the thickness of the Ag coating to be less than or equal to 100 nm and more preferably less than or equal to 40 nm, the diffusion between the Cu component of the Cu particles 41 and the Ag component of the Ag coating the Cu particles 41 is further accelerated during the curing step. Therefore, it is considered that a Cu-Ag alloy can be widely formed at the surface layer portion 42 on each of the Cu particles 41. It has been found that, by using the Cu particles 41 with a relatively thin thickness of Ag coating, a Cu-Ag alloy is formed at the surface of each of the electrically conductive filler particles 40 after the curing step is performed. The thickness of the Ag coating is preferably greater than or equal to 3 nm.

(Step 8) Subsequently, the plating layers 34 are formed. In the present embodiment, the plating layers 34 are formed on the surfaces of the resin electrode layers 33. In this case, after the base electrode layers 32 and the resin electrode layers 33 are formed, the plating layers 34 are formed on the surfaces of the resin electrode layers 33. More specifically, an Ni plating layer and an Sn plating layer are formed on the resin electrode layer 33. In performing a plating treatment, either electrolytic plating or electroless plating may be adopted; however, electroless plating needs pretreatment with catalysts or the like to improve the plating deposition rate, which complicates the step. Therefore, it is generally preferable to adopt electrolytic plating. Barrel plating is preferably used as a plating method.

In this way, the multilayer ceramic capacitor 10 according to the present embodiment is manufactured.

### 3. Operation and Advantageous Effects

(1)
   With the above configuration, at least part of the surface of each of the electrically conductive filler particles 40 is a Cu-Ag alloy. When at least part of the surface of each of the electrically conductive filler particles 40 is composed of a Cu-Ag alloy, the amount of Ag present at the surface of the electrically conductive filler particle 40 can be reduced. In other words, the amount of Ag, which tends to cause electrochemical migration at the surface of the electrically conductive filler particle 40, can be reduced. As a result, for example, a short circuit between the outer electrodes 30 having different potentials due to electrochemical migration can be reduced. Therefore, a decrease in the reliability of the multilayer ceramic capacitor 10 can be suppressed. Due to the presence of the Cu-Ag alloy at the surface of each of the electrically conductive filler particles 40, or due to the presence of the Cu-Ag alloy and Ag at the surface of each of the electrically conductive filler particles 40, an increase in the specific resistance of the resin electrode layer 33 can be suppressed even when each of the electrically conductive filler particles 40 includes the surface layer portion 42 in the resin electrode layer 33.

Furthermore, the resin electrode layer 33 includes the resin 50. Since the resin 50 is highly flexible, the resin 50 functions as an interference layer, and cracks in the multilayer ceramic capacitor 10 can be suppressed even when a physical impact or an impact due to a heat cycle is applied.

As in the above configuration, when at least part of the surface of each of the electrically conductive filler particles 40 is a Cu-Ag alloy, the Cu particles 41 in the electrically conductive filler precursor particles are prepared in a state where their surfaces are coated with Ag. Therefore, the oxidation of the Cu particles 41 in the conductive paste for resin electrodes before forming the resin electrode layer 33 can be suppressed by Ag coating, and the stability of the conductive paste for resin electrodes can be improved by suppressing the elution of Cu ions from the Cu particles 41.

(2)
In the above configuration, there may be cases where the Cu-Ag alloy at the surface of each of the electrically conductive filler particles 40 is formed to be Cu-rich, cases where the Cu-Ag alloy is formed to be Ag-rich, or cases where the Cu-Ag alloy is formed to be in a state where both are mixed. However, in any case, when at least part of the surface of each of the electrically conductive filler particles 40 is a Cu-Ag alloy, the amount of Ag present at the surface of each of the electrically conductive filler particles 40 can be reduced. Therefore, occurrence of electrochemical migration due to the presence of Ag can be suppressed, and a decrease in the reliability of the multilayer ceramic capacitor 10 can be suppressed.

(3)
When the surface area of the Cu-rich portion in a Cu-Ag alloy at the surface of the electrically conductive filler particle 40 is larger than the surface area of the Ag-rich portion at the surface of the electrically conductive filler particle 40, occurrence of electrochemical migration in the resin electrode layer 33 can be further suppressed. It is considered that, in the Cu-rich portion, Ag is present within the Cu particle 41 than the surface of the electrically conductive filler particle 40 compared to the Ag-rich portion. Therefore, it is considered that the presence of Ag at the surface of the electrically conductive filler particle 40 can be suppressed by the large surface area of the Cu-rich portion, and electrochemical migration can be further suppressed.

(4)
When the entire surface of the electrically conductive filler particle 40 is a Cu-Ag alloy, Ag, which leads to occurrence of electrochemical migration, can be caused not to be present at the surface of the electrically conductive filler particle 40. Therefore, a short circuit or the like between the outer electrodes 30 caused by occurrence of electrochemical migration due to the presence of Ag can be further suppressed.

(5)
When a Cu-Ag alloy is present within 220 nm from the surface of the electrically conductive filler particle 40, the electrical conductivity of the Cu particle 41 is less likely to be impaired by the Cu-Ag alloy.

(6)
When the aspect ratio of the electrically conductive filler particle 40 is higher than or equal to two and lower than or equal to seven, the electrically conductive filler particle 40 is elongated and flat. By using the electrically conductive filler particle 40 with such an elongated shape, the opportunities for contact between the electrically conductive filler particles 40 in the resin electrode layer 33 can be increased even when the amount of the electrically conductive filler particles 40 filled in the resin electrode layer 33 is smaller than that when the spherical electrically conductive filler particles 40 are filled in the resin electrode layer 33. In other words, even when the amount of the electrically conductive filler particles 40 filled in the resin electrode layer 33 is small, electrical conductivity can be enhanced by bringing the electrically conductive filler particles 40 into contact with each other.

By reducing the amount of the electrically conductive filler particles 40 filled in the resin electrode layer 33, the amount of the resin 50 can be increased. By increasing the amount of the resin 50, which is flexible and functions as an interference layer, cracks in the multilayer ceramic capacitor 10 can be suppressed.

### 4. Experimental Examples

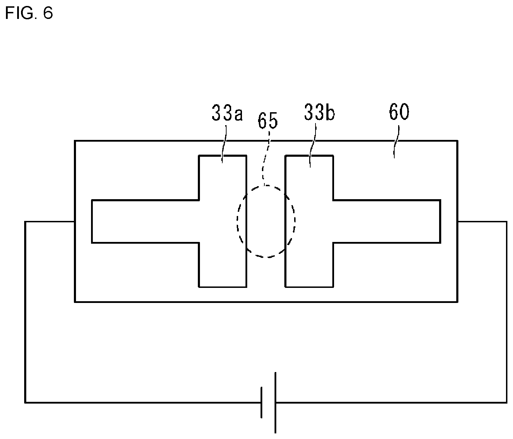

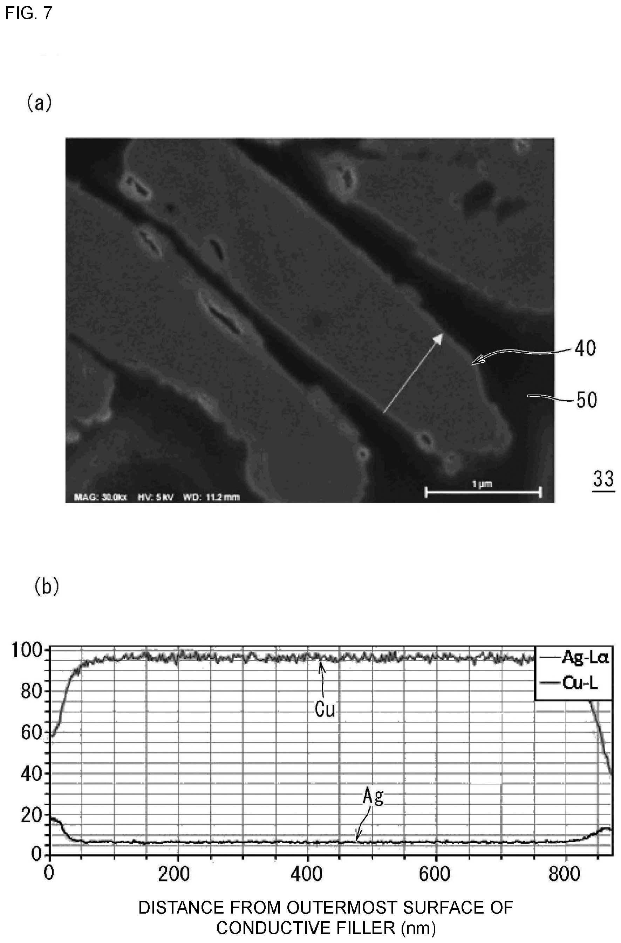

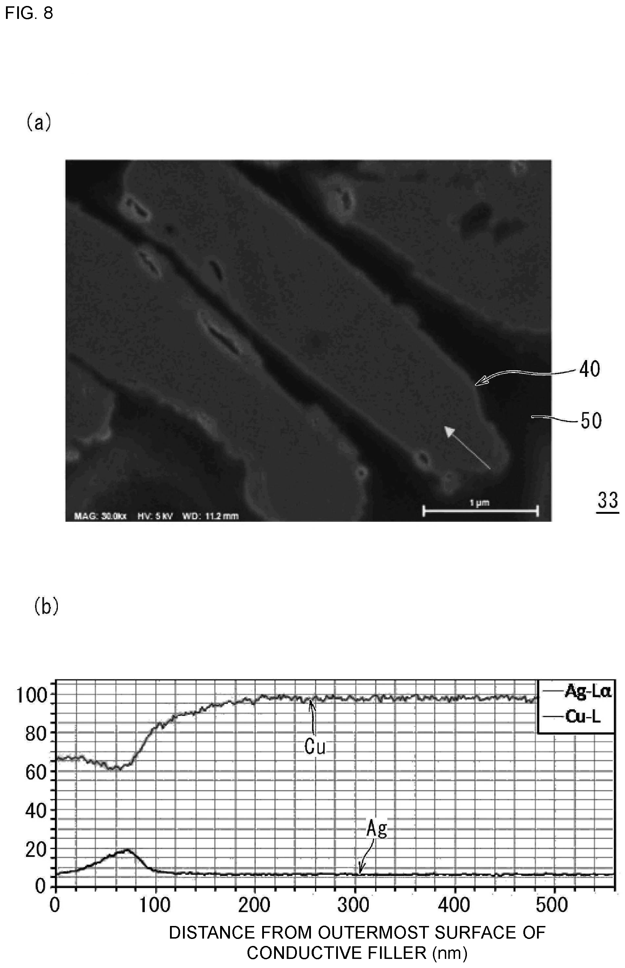

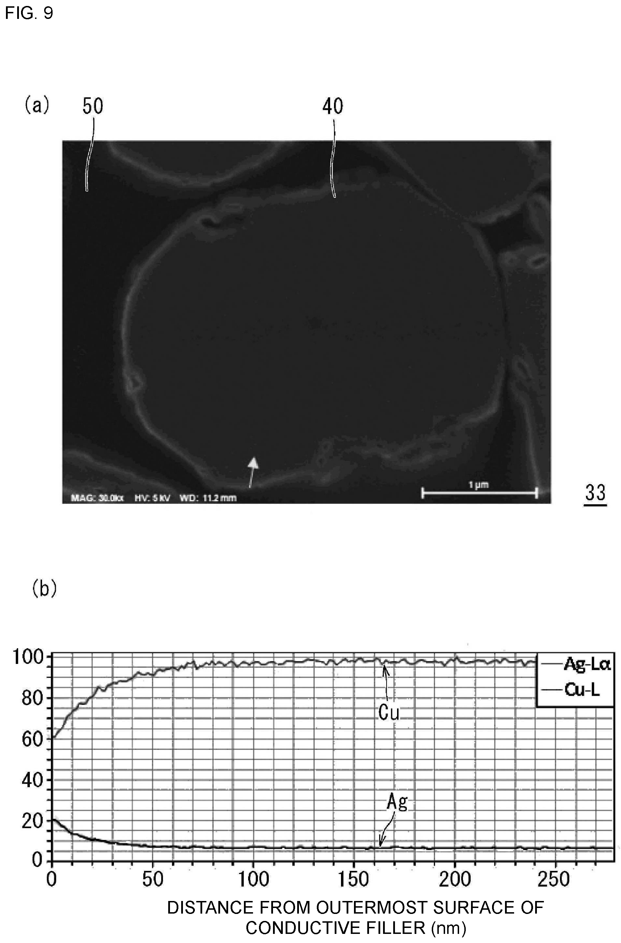

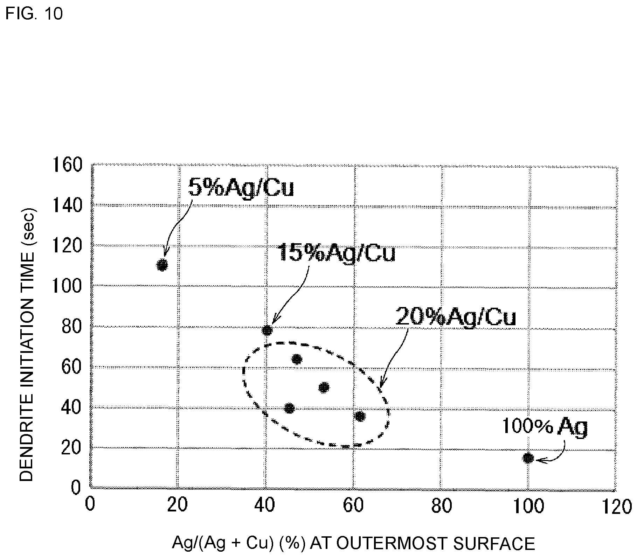

A resin electrode layer was created according to the above-described manufacturing method. Cross-sectional observation of the electrically conductive filler particles in the formed resin electrode layer, elemental analysis of the electrically conductive filler particles, and an electrochemical migration evaluation test were conducted. Fig. 6 is a schematic diagram of a test apparatus for an electrochemical migration evaluation test. In Fig. 7, Fig. 7(a) is an SEM image of flat electrically conductive filler particles, and Fig. 7(b) is an analysis graph that shows the results of a line scan performed in a short-side direction on the flat electrically conductive filler particles shown in Fig. 7(a). In Fig. 8, Fig. 8(a) is an SEM image of flat electrically conductive filler particles, and Fig. 8(b) is an analysis graph that shows the results of a line scan performed in a long-side direction on the flat electrically conductive filler particles shown in Fig. 8(a). Fig. 9(a) is an SEM image of substantially spherical, flat electrically conductive filler particles, and Fig. 9(b) is an analysis graph that shows the results of a line scan performed on the substantially spherical, flat electrically conductive filler particles shown in Fig. 9(a). Fig. 10 is an analysis graph that shows the results of dendrite initiation time.

### A. Preparation of Samples

As a sample, a conductive paste for resin electrodes, containing electrically conductive filler precursor particles, a resin precursor, a curing agent, a curing accelerator, a coupling agent, and a solvent, was prepared.

The electrically conductive filler precursor particles are Cu particles in a state where the entire surface is coated with Ag. The electrically conductive filler precursor particles include flat ones. For example, in the example of Fig. 7, the flat electrically conductive filler precursor particle had a long side L1 of about 4.5 µm and a short side L2 of about 1 µm. The thickness of the Ag coating on the Cu particle was about 5 nm.

As for the electrically conductive filler precursor particles, spherical ones may be included in addition to flat ones or spherical ones may be included instead of flat ones. In the spherical electrically conductive filler precursor particles, the D50 of the Cu particles was about 7 µm.

A bisphenol A type epoxy resin was used as the resin precursor.

A novolac phenolic resin was used as the curing agent.

An imidazole compound was used as the curing accelerator.

A silane-based coupling agent was used as the coupling agent.

Diethylene glycol monobutyl ether was used as the solvent.

In the conductive paste for resin electrodes, the electrically conductive filler precursor particles, the resin precursor, and the curing agent were blended in amounts of 88 mass%, 10 mass%, and 2 mass%, respectively, with an appropriate amount of the curing accelerator and the coupling agent, and the remainder being the solvent. After being mixed with a planetary mixer, the mixture was dispersed and kneaded with a three-roll mill to prepare a sample of the conductive paste for resin electrodes.

The conductive paste for resin electrodes was dried at a temperature of 145°C for 23 minutes in the drying step. Subsequently, the curing treatment was performed in an atmosphere of 230°C for an hour in the curing step to form a resin electrode layer.

### B. Evaluation of Sample

The resin electrode layer formed above was subjected to cross-sectional observation of the electrically conductive filler particles, elemental analysis of the electrically conductive filler particles, and an electrochemical migration evaluation test.

### (a) Cross-Sectional Observation of Electrically Conductive Filler Particles

For the cross sections of the electrically conductive filler particles included in the resin electrode layer, SEM images of flat electrically conductive filler particles (Fig. 7(a), Fig. 8(a)) and substantially spherical, flat electrically conductive filler particles (Fig. 9(a)) were obtained using a scanning electron microscope. SEM images were acquired under the following conditions.
- Acceleration voltage: 5 kV
- Magnification: 30000 times
- Working distance (WD): 11.2 mm

### (b) Elemental Analysis of Electrically Conductive Filler Particles

The acquired SEM images were transferred into a QUANTAX FlatQUAD (EDX: energy-dispersive X-ray microanalyzer) manufactured by Bruker AXS, and mapping analysis of Ag and Cu was performed by line scanning. Acquisition time was 120 sec. As a result of mapping analysis, the X-ray intensity of each element at each scan position was determined relative to the absolute X-ray intensity (maximum value) of that element. In other words, for Ag, the ratio of the X-ray intensity of Ag at each scan position relative to the absolute X-ray intensity detected for Ag was determined. Similarly, for Cu, the ratio of the X-ray intensity of Cu at each scan position relative to the absolute X-ray intensity detected for Cu was determined.

The results of line scanning in the short-side direction for the flat electrically conductive filler particles shown in Fig. 7(a) (Fig. 7(b)), the results of line scanning in the long-side direction for the flat electrically conductive filler particles shown in Fig. 8(a) (Fig. 8(b)), and the results of line scanning for the substantially spherical, flat electrically conductive filler particles shown in Fig. 9(a) (Fig. 9(b)) were obtained.

### (c) Electrochemical Migration Evaluation Test

A test apparatus shown in Fig. 6 was prepared for an electrochemical migration evaluation test. As shown in Fig. 6, the first resin electrode layer 33a and the second resin electrode layer 33b were formed on a substrate 60 made of alumina. The distance between the first resin electrode layer 33a and the second resin electrode layer 33b was set to 4 mm.

The first and second resin electrode layers 33a and 33b were formed by applying and drying four types of conductive pastes for resin electrodes, each having one of four types of electrically conductive filler precursor particles, on the substrate 60 (at a temperature of 145°C for 23 minutes) and then curing the conductive pastes (for an hour in an atmosphere of 230°C). The four types of electrically conductive filler precursor particles are as follows. In these four types of electrically conductive filler precursor particles, Ag is present on the surfaces of the Cu particles.
- In a 5% Ag/Cu electrically conductive filler precursor particle, the mass ratio of Ag to Cu particle is 5:95, and 5% of Ag coats the surface of the Cu particle (5% Ag/Cu in Fig. 10).
- In a 15% Ag/Cu electrically conductive filler precursor particle, the mass ratio of Ag to Cu particle is 15:85, and 15% of Ag coats the surface of the Cu particle (15% Ag/Cu in Fig. 10).
- In a 20% Ag/Cu electrically conductive filler precursor particle, the mass ratio of Ag to Cu particle is 20:80, and 20% of Ag coats the surface of the Cu particle (20% Ag/Cu in Fig. 10).
- A 100% Ag electrically conductive filler precursor particle is composed of Ag particles in which the mass ratio of Ag to Cu particle is 100:0 (100% Ag in Fig. 10).

Taking the 20% Ag/Cu electrically conductive filler precursor particle as an example, a point that a Cu-Ag alloy can be widely formed at the surface layer portion on a Cu particle after the curing step will be further described. The term "20% Ag/Cu electrically conductive filler precursor particle" refers to an electrically conductive filler precursor particle in which 20% by mass of Ag is contained in one Cu particle. However, the thickness of the Ag coating on the surface of the Cu particle varies depending on the particle size (specific surface area (m²/g)) of each electrically conductive filler precursor particle. For example, when the specific surface area of the electrically conductive filler precursor particles is 0.2 m²/g, the thickness of the Ag coating is 95 nm, and, when the specific surface area of the electrically conductive filler precursor particles is 0.5 m²/g, the thickness of the Ag coating is 38 nm. In this way, even when the specific surface area of the electrically conductive filler precursor particles varies and the thickness of the Ag coating varies, it has been confirmed that, when a conductive paste for resin electrodes, containing 20% Ag/Cu electrically conductive filler precursor particles, is cured to form a resin electrode layer, a Cu-Ag alloy is formed at the surfaces of the electrically conductive filler particles. In the electrically conductive filler precursor particle, the thickness of the Ag coating is preferably less than or equal to 100 nm, and more preferably less than or equal to 40 nm. By setting the thickness of the Ag coating to 100 nm or less, and more preferably to 40 nm or less, a Cu-Ag alloy can be widely formed at the surface layer portion on a Cu particle. The thickness of the Ag coating is preferably greater than or equal to 3 nm.

Four types of the substrates 60, each having the resin electrode layers 33a and 33b formed from one of the above-described four types of conductive paste for resin electrodes, were created. Only the resin electrode layers 33a and 33b were formed on each substrate 60, and, for example, the base electrode layer 32 and the plating layer 34 were not formed. Each substrate 60 was placed in a normal temperature environment of 25°C, pure water 65 was dropped between the first resin electrode layer 33a and the second resin electrode layer 33b, and a voltage of 20 V was applied between the first and second resin electrode layers 33a and 33b. The electric field strength between the first and second resin electrode layers 33a and 33b was 5000 V/m. When the deposition of dendritic Ag began in the resin electrode layers 33a and 33b, the dendrite initiation time was acquired. The results are shown in Fig. 10.

In Fig. 10, the horizontal axis represents the amount of Ag detected relative to the total amount of Ag and Cu detected at the outermost surface of an electrically conductive filler particle alone ((amount of Ag detected) / (amount of Ag detected + amount of Cu detected)). Hereinafter, the horizontal axis will be further described. Electrically conductive filler precursor particles of 5% Ag/Cu, 15% Ag/Cu, 20% Ag/Cu, and 100% Ag each were treated for an hour in an atmosphere of 230°C (a treatment assuming the curing step). As a result, the electrically conductive filler particle alone of each of the above-described four types of electrically conductive filler precursor particles was obtained. The peak intensity ratio of Ag to Cu was measured by X-ray photoelectron spectroscopy (XPS) for the surface of each electrically conductive filler particle alone. From the peak intensity ratio, Ag/(Ag + Cu) at the surface of the electrically conductive filler particle alone of each of the four types of electrically conductive filler particle was calculated and shown on the horizontal axis. Furthermore, the Ag/(Ag + Cu) of the electrically conductive filler particles shown on the horizontal axis of Fig. 10 is not the Ag/(Ag + Cu) of the electrically conductive filler particles in a state included in the resin electrode layer.

In Fig. 10, the vertical axis represents the dendrite initiation time measured with the test apparatus shown in Fig. 6 for the four types of substrates 60, each having the resin electrode layers 33a and 33b containing one of the above-described four types of electrically conductive filler particles.

Furthermore, unlike the experiments using the test apparatus shown in Fig. 6, an electrochemical migration evaluation test was conducted by counting the number of occurrences of electrochemical migration in the multilayer ceramic capacitor having the resin electrode layer. Specifically, this will be described below.

The number of occurrences of electrochemical migration was counted for the multilayer ceramic capacitor having a resin electrode layer using a 5% Ag/Cu conductive paste for resin electrodes and the multilayer ceramic capacitor having a resin electrode layer using a 100% Ag conductive paste for resin electrodes. The configurations of the multilayer ceramic capacitors are the same as that of the above-described embodiment. Initially, 72 multilayer ceramic capacitors each having a resin electrode layer derived from 5% Ag/Cu electrically conductive filler precursor particles and 72 multilayer ceramic capacitors each having a resin electrode layer derived from 100% Ag electrically conductive filler precursor particles were prepared. Each multilayer ceramic capacitor was placed in an environment at 125°C, and a voltage of 75 V was applied between the first and second outer electrodes 30a and 30b. The test time was set to 2000 hours. When a short circuit occurred between the first and second outer electrodes 30a and 30b after an elapsed test time of 2000 hours, the sample was counted as one electrochemical migration failure (NG count). The count results are shown in Table 1.

**[Table 1]**

| Conductive Paste for Resin Electrodes | Temperature | Voltage | Test Time | Number of Occurrences of Electrochemical Migration (NG / Number of Tests) |
|---|---|---|---|---|
| 100% Ag | 125°C | 75 V | 2000 Hours | 43/72 |
| 5% Ag/Cu | 125°C | 75 V | 2000 Hours | 0/72 |

### C. Experimental Results

The results of analyzing Ag and Cu by line scanning the electrically conductive filler particles in the direction indicated by the arrows in the cross sections of the electrically conductive filler particles included in the resin electrode layers in Figs. 7(a), 8(a), and 9(a) are shown in Figs. 7(b), 8(b), and 9(b). In Figs. 7(b), 8(b), and 9(b), the horizontal axis represents the scanning distance in the direction of the arrow from the outermost surface (0 nm) of the electrically conductive filler particle, and the vertical axis represents the ratio of each of the elements Ag and Cu to the absolute strength. Here, the absolute strength is set to 100. In Figs. 7 to 9, the electrically conductive filler particles included in the resin electrode layer were analyzed when the resin electrode layer was formed using a conductive paste for resin electrodes, containing 5% Ag/Cu electrically conductive filler precursor particles.

As shown in Fig. 7(b), in a region from the outermost surface of the electrically conductive filler particle to a depth of about 50 nm, Cu was mainly detected, and Ag was also detected. In a region from the outermost surface of the electrically conductive filler particle to a depth of about 50 nm, the total amount of Ag and Cu detected is not equal to 100%. The surface of the electrically conductive filler particle was treated with an organic surface treatment because the surface was the interface with a resin, and, for this reason, components such as C and O were present at the surface of the electrically conductive filler particle. Therefore, it is considered that, because components such as C and O, other than Ag and Cu, are detected at the surface of the electrically conductive filler particle, the total amount of Ag and Cu detected is not equal to 100%.

Then, in a region deeper than about 50 nm from the outermost surface of the electrically conductive filler particle, Cu was detected at about 95%, and Ag was apparently detected at 5%. When the electrically conductive filler particle is subjected to line scanning to analyze the intensities of the respective elements, scattered X-rays generated from the electrically conductive filler particle are detected by EDX. Due to this effect, the background of the intensities of detected X-rays increases. In other words, the intensities of the detected X-rays include influences other than the composition of the electrically conductive filler particle itself. For this reason, even in a region where Ag is not actually present, a certain numerical value is detected, that is, Ag appears to be detected at about 5% in a region deeper than about 50 nm from the outermost surface of the electrically conductive filler particle as shown in Fig. 7(b). Therefore, it was assumed that the point at which the Ag profile becomes constant, that is, in the example of Fig. 7(b), the point at which Ag appears to be about 5%, was the point at which Ag is 0% (the point at which Ag is not detected).

Here, the electrically conductive filler precursor particles before the curing step are in a state where the surfaces of the Cu particles are coated with Ag. At this time, in the electrically conductive filler precursor particle, Ag is mainly detected on the surface of the Cu particle, and Ag is not detected inside the Cu particle. When the electrically conductive filler precursor particles are subjected to the curing step to become electrically conductive filler particles, Cu is mainly detected and Ag is also detected in a region from the outermost surface of each of the electrically conductive filler particles to a depth of about 50 nm, that is, near the surface. Therefore, it is considered that a Cu-Ag alloy is formed at the surface of each of the electrically conductive filler particles. Specifically, it is considered that near the surface of each of the electrically conductive filler particles, the Cu component of the Cu particle and the Ag component of Ag on the surface of the Cu particle diffuse into each other and, therefore, a Cu-Ag alloy is formed on the surface of the Cu particle (in the example shown in Fig. 7(b), in a region from the outermost surface of each of the electrically conductive filler particles to a depth of about 50 nm). While Cu was mainly detected in a region deeper than a depth of about 50 nm from the outermost surface of each of the electrically conductive filler particles, Ag was not detected. It has been found that Ag, which was present on the surface of the Cu particle in the electrically conductive filler precursor particle, exists mainly as a Cu-Ag alloy at the surface of the electrically conductive filler particle. It is considered that Ag that has not formed a Cu-Ag alloy may be present as Ag at the surface of the electrically conductive filler particle.

As shown in Fig. 8(b), in a region from the outermost surface of the electrically conductive filler particle to a depth of about 100 nm to about 120 nm, Cu was mainly detected, and Ag was also detected. Then, in a region deeper than a depth of about 100 nm to about 120 nm from the outermost surface of the electrically conductive filler particle, Cu was mainly detected, and Ag was not detected.

Here, as described above, Ag is mainly detected on the surface of the Cu particle in the electrically conductive filler precursor particle before the curing step, and Ag is not detected inside the Cu particle. Then, when the electrically conductive filler precursor particles are subjected to the curing step to become electrically conductive filler particles, Cu is mainly detected near the surfaces of the Cu particles (in the example of Fig. 8(b), in the region from the outermost surface of each of the electrically conductive filler particles to a depth of about 100 nm to about 120 nm), and Ag is also detected. Therefore, it is considered that a Cu-Ag alloy is formed at the surface of each of the electrically conductive filler particles. While Cu was mainly detected in a region deeper than a depth of about 100 nm to about 120 nm from the outermost surface of each of the electrically conductive filler particles, Ag was not detected. It has been found that Ag, which was present on the surface of the Cu particle in the electrically conductive filler precursor particle, exists mainly as a Cu-Ag alloy at the surface of the electrically conductive filler particle. It is considered that Ag that has not formed a Cu-Ag alloy may be present as Ag at the surface of the electrically conductive filler particle.

As shown in Fig. 9(b), in a region from the outermost surface of the electrically conductive filler particle to a depth of about 50 nm, Cu was mainly detected, and Ag was also detected. Then, in a region deeper than a depth of about 50 nm from the outermost surface of the electrically conductive filler particle, Cu was mainly detected, and Ag was not detected.

Here, as described above, Ag is mainly detected on the surface of the Cu particle in the electrically conductive filler precursor particle before the curing step, and Ag is not detected inside the Cu particle. Then, when the electrically conductive filler precursor particles are subjected to the curing step to become electrically conductive filler particles, Cu is mainly detected near the surfaces of the Cu particles (in the example of Fig. 9(b), in the region from the outermost surface of each of the electrically conductive filler particles to a depth of about 50 nm), and Ag is also detected. Therefore, it is considered that a Cu-Ag alloy is formed at the surface of each of the electrically conductive filler particles. While Cu was mainly detected in a region deeper than a depth of about 50 nm from the outermost surface of each of the electrically conductive filler particles, Ag was not detected. It has been found that Ag, which was present on the surface of the Cu particle in the electrically conductive filler precursor particle, exists mainly as a Cu-Ag alloy at the surface of the electrically conductive filler particle. It is considered that Ag that has not formed a Cu-Ag alloy may be present as Ag at the surface of the electrically conductive filler particle.

Next, the results shown in Fig. 10 will be discussed. In any of the electrically conductive filler precursor particles of 5% Ag/Cu, 15% Ag/Cu, and 20% Ag/Cu, Ag is present only on the surfaces of the Cu particles. The 100% Ag electrically conductive filler precursor particles are formed of Ag particles. Then, the electrically conductive filler precursor particles of 5% Ag/Cu, 15% Ag/Cu, and 20% Ag/Cu are treated for an hour in an atmosphere of 230°C (a treatment assuming the curing step) to form a Cu-Ag alloy at the surfaces of the electrically conductive filler particles.

According to Fig. 10, when the 5% Ag/Cu electrically conductive filler precursor particles were treated for an hour in an atmosphere of 230°C (a treatment assuming the curing step), Ag having about 18% of Ag/(Ag + Cu) was present at the surfaces of the electrically conductive filler particles. In other words, in the 5% Ag/Cu electrically conductive filler precursor particle, the entire surface of the Cu particle was coated with Ag; however, in the cured electrically conductive filler particle, Ag was present at about 18% of the surface of the electrically conductive filler particle. Then, a Cu-Ag alloy was present at the remaining surface (about 82% of the surface) of the electrically conductive filler particle. In this case, the dendrite initiation time was about 110 sec. As described above, the proportion (%) of elements at the surface of the electrically conductive filler particle here was measured in a state of the electrically conductive filler particle alone and was not measured in the electrically conductive filler particle in a state contained in a resin electrode layer. The same applies below.

According to Fig. 10, when the 15% Ag/Cu electrically conductive filler precursor particles were treated for an hour in an atmosphere of 230°C (a treatment assuming the curing step), Ag having about 40% of Ag/(Ag + Cu) was present at the surfaces of the electrically conductive filler particles. In other words, in the 15% Ag/Cu electrically conductive filler precursor particle, the entire surface of the Cu particle was coated with Ag; however, in the cured electrically conductive filler particle, Ag was present at about 40% of the surface of the electrically conductive filler particle. Then, a Cu-Ag alloy was present at the remaining surface (about 60% of the surface) of the electrically conductive filler particle. In this case, the dendrite initiation time was about 80 sec.

According to Fig. 10, when the 20% Ag/Cu electrically conductive filler precursor particles were treated for an hour in an atmosphere of 230°C (a treatment assuming the curing step), Ag having about 45% to about 60% of Ag/(Ag + Cu) was present at the surfaces of the electrically conductive filler particles. In other words, in the 20% Ag/Cu electrically conductive filler precursor particle, the entire surface of the Cu particles was coated with Ag, but in the cured electrically conductive filler particle, Ag was present at about 45% to about 60% of the surface of the electrically conductive filler particle. Then, a Cu-Ag alloy was present at the remaining surface (about 55% to about 40% of the surface) of the electrically conductive filler particle. In this case, the dendrite initiation time was about 40 sec to about 65 sec.

According to Fig. 10, the 100% Ag electrically conductive filler precursor particles were treated for an hour in an atmosphere of 230°C (a treatment assuming the curing step) to become electrically conductive filler particles composed of Ag particles. As a result, a Cu-Ag alloy was not present on the surfaces of Ag particles. In this case, the dendrite initiation time was about 18 sec.

From the results shown in Fig. 10, in the case of 100% Ag, that is, Ag particles, the dendrite initiation time is short and is about 18 s, so electrochemical migration cannot be suppressed. It has been found that the dendrite initiation time shortens as the proportion of Ag present at the surfaces of the electrically conductive filler particles increases. Therefore, it has been found that the dendrite initiation time extends and the occurrence of electrochemical migration can be more suppressed as the amount of Ag present at the surfaces of the electrically conductive filler particles reduces, that is, as the amount of Cu-Ag alloy present at the surfaces of the electrically conductive filler particles increases.

According to the results shown in Table 1, in the case of the resin electrode layer using a conductive paste for resin electrodes, containing 100% Ag electrically conductive filler precursor particles, electrochemical migration occurred in 43 out of 72 multilayer ceramic capacitors. On the other hand, in the case of the resin electrode layer using a conductive paste for resin electrodes, containing 5% Ag/Cu electrically conductive filler precursor particles, there were no samples in which electrochemical migration occurred among the 72 multilayer ceramic capacitors.

From the above, it has been found that the occurrence of electrochemical migration can be suppressed by having a Cu-Ag alloy present on the surfaces of Cu particles and reducing the amount of Ag on the surfaces of Cu particles in the electrically conductive filler particles.

As described above, the embodiments of the present invention have been described in the specification; however, the present invention is not limited thereto.

Various modifications may be added to the embodiments described above in terms of mechanism, shape, material, number, position, arrangement, or the like without departing from the scope of the technical idea and object of the present invention, and the present invention encompasses those modifications.

### <Modifications>

(1)
   In the above embodiment, in Figs. 7 to 9, when a conductive paste for resin electrodes, containing 5% Ag/Cu electrically conductive filler precursor particles, is used to form a resin electrode layer, the electrically conductive filler particles included in the resin electrode layer is analyzed. Alternatively, the composition of the electrically conductive filler precursor particles is not limited thereto. For example, 20% Ag/Cu electrically conductive filler precursor particles may be used.

The flat electrically conductive filler particles included in a resin electrode layer were analyzed when the resin electrode layer was formed using a conductive paste for resin electrodes, containing 20% Ag/Cu electrically conductive filler precursor particles, and the analyzed results are shown below. Although not shown in the drawing, as a result of line scanning the electrically conductive filler particles derived from 20% Ag/Cu by EDX, Cu was mainly detected and Ag was also detected in a region from the outermost surface of the electrically conductive filler particle to a depth of about 220 nm. Then, in a region deeper than a depth of about 220 nm from the outermost surface of the electrically conductive filler particle, Cu was mainly detected, and Ag was not detected. From this, it is considered that, when the 20% Ag/Cu electrically conductive filler precursor particles are cured to become electrically conductive filler particles, a Cu-Ag alloy is formed on the surfaces of the Cu particles (a region from the outermost surface of the electrically conductive filler particle to a depth of about 220 nm). Since Ag was not detected in a region deeper than a depth of about 220 nm from the outermost surface of each of the electrically conductive filler particles, it has been found that Ag, which was present on the surface of the Cu particle in the electrically conductive filler precursor particle, exists mainly as a Cu-Ag alloy on the surface of the Cu particle of the electrically conductive filler particle. It is considered that Ag that has not formed a Cu-Ag alloy may be present as Ag on the surface of the Cu particle.

From the above, it has been confirmed that Ag can be diffused further deeper in the electrically conductive filler particles when the amount of Ag is increased to 20% Ag/Cu compared to the electrically conductive filler particles derived from 5% Ag/Cu, shown in Figs. 7 to 9, and, furthermore, a Cu-Ag alloy can be formed on the surfaces of the Cu particles even when the amount of Ag is increased to 20% Ag/Cu.

(2)
In the above embodiment, a two-terminal multilayer ceramic capacitor having two terminals, that is, the first outer electrode 30a and the second outer electrode 30b, has been described as a multilayer ceramic electronic component. However, the present invention is not limited to a two-terminal-type multilayer ceramic capacitor and can be applied to a multilayer ceramic electronic component with outer electrodes. For example, the present invention may be applied to a three-terminal-type multilayer ceramic capacitor. The three-terminal-type multilayer ceramic capacitor includes the multilayer body 12 same as the above embodiment and first to fourth outer electrodes. The internal electrode layers 16 include first internal electrode layers extended to the first end surface 12e and the second end surface 12f, and second internal electrode layers extended to the first side surface 12c and the second side surface 12d. The first outer electrode is disposed on the first end surface 12e of the multilayer body 12. The first outer electrode is electrically connected to the first internal electrode layers exposed at the first end surface 12e of the multilayer body 12. The second outer electrode is disposed on the second end surface 12f of the multilayer body 12. The second outer electrode is electrically connected to the first internal electrode layers exposed at the second end surface 12f of the multilayer body 12. The third outer electrode is disposed on the first side surface 12c of the multilayer body 12. The third outer electrode is electrically connected to the second internal electrode layers exposed at the first side surface 12c of the multilayer body 12. The fourth outer electrode is disposed on the second side surface 12d of the multilayer body 12. The fourth outer electrode is electrically connected to the second internal electrode layers exposed at the second side surface 12d of the multilayer body 12.

Each of the first to fourth outer electrodes is formed by laminating a base electrode layer, a resin electrode layer, and a plating layer in this order, similar to the above embodiment. The resin electrode layer includes electrically conductive filler particles and a resin.

(3)
In the above embodiment, each of the first and second outer electrodes 30a and 30b includes the base electrode layer 32. However, each of the first and second outer electrodes 30a and 30b does not need to include the base electrode layer 32. Therefore, each of the first and second outer electrodes 30a and 30b may be formed by laminating a resin electrode layer and a plating layer in this order.
<1>
   A multilayer ceramic electronic component includes:
   a multilayer body in which a plurality of ceramic layers and a plurality of internal electrode layers are alternately laminated; and
   an outer electrode formed on an outer surface of the multilayer body and electrically connected to the internal electrode layers, wherein
   the outer electrode includes a resin electrode layer that includes a resin and a plurality of electrically conductive filler particles, and
   at least some of the plurality of electrically conductive filler particles each include a Cu particle as a core and have at least part of a surface composed of a Cu-Ag alloy including Cu and Ag.
<2>
   In the multilayer ceramic electronic component according to <1>, the Cu-Ag alloy includes at least one of a Cu-rich portion in which a Cu component is greater than an Ag component and an Ag-rich portion in which an Ag component is greater than a Cu component.
<3>
   In the multilayer ceramic electronic component according to <2>, the Cu-Ag alloy includes the Cu-rich portion and the Ag-rich portion, and a surface area of the Cu-rich portion is larger than a surface area of the Ag-rich portion.
<4>
   In the multilayer ceramic electronic component according to any one of <1> to <3>, an entire surface of each of the electrically conductive filler particles is composed of the Cu-Ag alloy.
<5>
   In the multilayer ceramic electronic component according to any one of <1> to <4>, the Cu-Ag alloy is present within 220 nm from the surface of each of the at least some of the plurality of electrically conductive filler particles.
<6>
   In the multilayer ceramic electronic component according to any one of <1> to <5>, an aspect ratio of each of the electrically conductive filler particles is higher than or equal to two and lower than or equal to seven.
<7>
   A manufacturing method for a multilayer ceramic electronic component includes:
   a multilayer body formation step of forming a multilayer body in which a plurality of ceramic layers and a plurality of internal electrode layers are alternately laminated;
   an application step of applying a resin electrode conductive paste onto the multilayer body, the resin electrode conductive paste including a plurality of electrically conductive filler precursor particles and a resin precursor, the plurality of electrically conductive filler precursor particles each including a Cu particle as a core, the Cu particle having a surface coated with Ag having a thickness greater than or equal to 3 nm and less than or equal to 100 nm; and
   a curing step of forming a resin electrode layer, the resin electrode layer including a plurality of electrically conductive filler particles and a resin by subjecting the resin electrode conductive paste to a curing treatment in an atmosphere higher than or equal to 180°C and lower than or equal to 230°C, the plurality of electrically conductive filler particles being obtained by curing the plurality of electrically conductive filler precursor particles, the resin being obtained by curing the resin precursor, wherein
   through the curing, at least some of the plurality of electrically conductive filler particles each include a Cu particle as a core and have at least part of a surface composed of a Cu-Ag alloy including Cu and Ag.
<8>
   In the manufacturing method for a multilayer ceramic electronic component according to <7>, in the plurality of electrically conductive filler precursor particles, a surface of each of the Cu particles is coated with Ag having a thickness less than or equal to 40 nm.

### Reference Signs List

10 multilayer ceramic capacitor
12 multilayer body
12a, 12b first and second main surfaces
12c, 12d first and second side surfaces
12e, 12f first and second end surfaces
14 ceramic layer
16 internal electrode layer
16a, 16b first and second internal electrode layers
18 inner layer portion
20a, 20b first and second main surface-side outer layer portions
22a, 22b first and second side surface-side outer layer portions
24a, 24b first and second end surface-side outer layer portions
26a, 26b first and second counter electrode portions
28a, 28b first and second lead-out electrode portions
30 outer electrode
30a, 30b first and second outer electrodes
32 base electrode layer
32a, 32b first and second base electrode layers
33 resin electrode layer
33a, 33b first and second resin electrode layers
34 plating layer
34a, 34b first and second plating layers
40 electrically conductive filler particle
41 Cu particle
42 surface layer portion
50 resin
60 substrate
t thickness
L1, L2 length
x height direction
y width direction
z length direction

## Claims

1. A multilayer ceramic electronic component comprising:
a multilayer body in which a plurality of ceramic layers and a plurality of internal electrode layers are alternately laminated; and
an outer electrode formed on an outer surface of the multilayer body and electrically connected to the internal electrode layers, wherein
the outer electrode includes a resin electrode layer that includes a resin and a plurality of electrically conductive filler particles, and
at least some of the plurality of electrically conductive filler particles each include a Cu particle as a core and have at least part of a surface composed of a Cu-Ag alloy including Cu and Ag.

2. The multilayer ceramic electronic component according to Claim 1, wherein the Cu-Ag alloy includes at least one of a Cu-rich portion in which a Cu component is greater than an Ag component and an Ag-rich portion in which an Ag component is greater than a Cu component.

3. The multilayer ceramic electronic component according to Claim 2, wherein the Cu-Ag alloy includes the Cu-rich portion and the Ag-rich portion, and a surface area of the Cu-rich portion is larger than a surface area of the Ag-rich portion.

4. The multilayer ceramic electronic component according to any one of Claims 1 to 3, wherein an entire surface of each of the electrically conductive filler particles is composed of the Cu-Ag alloy.

5. The multilayer ceramic electronic component according to any one of Claims 1 to 4, wherein the Cu-Ag alloy is present within 220 nm from the surface of each of the at least some of the plurality of electrically conductive filler particles.

6. The multilayer ceramic electronic component according to any one of Claims 1 to 5, wherein an aspect ratio of each of the electrically conductive filler particles is higher than or equal to two and lower than or equal to seven.

7. A manufacturing method for a multilayer ceramic electronic component, the manufacturing method comprising:
a multilayer body formation step of forming a multilayer body in which a plurality of ceramic layers and a plurality of internal electrode layers are alternately laminated;
an application step of applying a resin electrode conductive paste onto the multilayer body, the resin electrode conductive paste including a plurality of electrically conductive filler precursor particles and a resin precursor, the plurality of electrically conductive filler precursor particles each including a Cu particle as a core, the Cu particle having a surface coated with Ag having a thickness greater than or equal to 3 nm and less than or equal to 100 nm; and
a curing step of forming a resin electrode layer, the resin electrode layer including a plurality of electrically conductive filler particles and a resin by subjecting the resin electrode conductive paste to a curing treatment in an atmosphere higher than or equal to 180°C and lower than or equal to 230°C, the plurality of electrically conductive filler particles being obtained by curing the plurality of electrically conductive filler precursor particles, the resin being obtained by curing the resin precursor, wherein
through the curing, at least some of the plurality of electrically conductive filler particles each include a Cu particle as a core and have at least part of a surface composed of a Cu-Ag alloy including Cu and Ag.

8. The manufacturing method for a multilayer ceramic electronic component according to Claim 7, wherein, in the plurality of electrically conductive filler precursor particles, a surface of each of the Cu particles is coated with Ag having a thickness less than or equal to 40 nm.
